# EUROPEAN PATENT APPLICATION

(11) **EP 4 835 651 A1**
(43) Date of publication of application: **04.11.2026**
(21) Application number: 24912665.7
(22) Date of filing: 20.12.2024
(51) Int. Cl.: G06F 8/65

(54) **RENDERING DISPLAY SYSTEM, RENDERING DISPLAY METHOD, VOICE OUTPUT SYSTEM, AND VOICE OUTPUT METHOD**

(30) Priority: 27.12.2023 US 202363615039 P
(71) Applicant: Nuvoton Technology Corporation Japan, Nagaokakyo City, Kyoto 617-8520 (JP)
(72) Inventor: TADA, Kazuhito, Nagaokakyo City, Kyoto 6178520 (JP); ENDOU, Takeshi, Nagaokakyo City, Kyoto 6178520 (JP); OGA, Takahiro, Nagaokakyo City, Kyoto 6178520 (JP); NODA, Daisuke, Nagaokakyo City, Kyoto 6178520 (JP)
(74) Representative: Appelt, Christian W.
(86) International application number: PCT/JP2024/045180
(87) International publication number: WO 2025/142776

(57) **Abstract**

A rendering system (1) including a rendering device (10) and a nonvolatile memory (20), where the rendering device includes: a rendering processor (11) that performs a rendering process; a rendering process idle time detector (12) that detects idle time that occurs during the rendering process; and a firmware update processor (13) that performs a firmware update. The nonvolatile memory (20) includes a first storage area (21) and a second storage area (22) each of which stores firmware. The rendering processor (11) obtains a program code from the first storage area (21), and performs the rendering process by executing the obtained program code. The firmware update processor (13) performs access to the second storage area (22) based on idle time information indicating the detected idle time, where the access is related to the firmware update.

## Description

### [Technical Field]

The present invention relates to rendering systems, rendering methods, audio output systems, and audio output methods.

### [Background Art]

Patent Literature (PTL) 1 and PTL 2 disclose techniques related to firmware over-the-air (FOTA). In general, when performing system operation using firmware stored in a single memory, it is difficult to update the firmware stored in the single memory. Therefore, in the FOTA, firmware is stored in a memory (a nonvolatile memory) for startup and a memory (a nonvolatile memory) for update. In the FOTA, when a program code is obtained from the startup memory and the system is operating, firmware update data received from an external network via the Telematics Control Unit (TCU) connected to the system is written in the update memory in the background. When the update of the firmware in the update memory is completed, the update memory becomes the startup memory, and a program code is obtained from the startup memory to operate the system. The memory that was originally used for startup becomes update memory, and when new firmware update data is received in the future, the firmware update data will be written in the update memory.

### [Citation List]

### [Patent Literature]

[PTL 1] Japanese Unexamined Patent Application Publication No. 2019-144669
[PTL 2] Japanese Unexamined Patent Application Publication No. 2021-71960

### [Summary of Invention]

### [Technical Problem]

Since achieving FOTA using two nonvolatile memories increases the cost, achieving FOTA using a single nonvolatile memory is desired. For example, in the configuration using a single nonvolatile memory, it is conceivable to copy a program code for startup into volatile memory and thereafter read the program code from the volatile memory. However, when the capacity of the volatile memory is small, the memory capacity is strained by the retention of the program code, making memory operation difficult. Alternatively, a large-capacity volatile memory is necessary, increasing system costs.

In view of this, it is conceivable to use a single nonvolatile memory having both a storage area for startup and a storage area for update. However, during access to the storage area for update, reading of a program code from the storage area for startup is blocked, causing the process to be interrupted. When the rendering performance of 30 fps or 60 fps is assumed in a rendering process, for example, at 30 fps, a rendering update is required approximately every 33.3 ms, and at 60 fps, a rendering update is required approximately every 16.7 ms. In contrast, with the use of typical flash memory, a time required for sector erase of 4 KB is approximately 30 ms to 50 ms. Therefore, when sector erase is performed once during the rendering process at the rendering performance of 30 fps or 60 fps, more than one frame is displayed in an incomplete rendering state, causing flickering and other issues.

In view of this, the present disclosure provides, for instance, a rendering system capable of preventing process interruptions in FOTA that uses a single nonvolatile memory.

### [Solution to Problem]

A rendering system according to the present disclosure includes a rendering device and a nonvolatile memory, where the rendering device includes: a rendering processor that performs a rendering process; a rendering process idle time detector that detects idle time that occurs during the rendering process; and a firmware update processor that performs a firmware update for controlling the rendering device. The nonvolatile memory includes a first storage area and a second storage area each of which stores firmware. The rendering processor obtains a program code from the first storage area, and performs the rendering process by executing the obtained program code. The firmware update processor performs access to the second storage area based on idle time information indicating the detected idle time, where the access is related to the firmware update.

A rendering method according to the present disclosure is to be executed by a rendering system including a rendering device and a nonvolatile memory, where the nonvolatile memory includes a first storage area and a second storage area each of which stores firmware for controlling the rendering device. The rendering method includes: performing a rendering process; detecting idle time that occurs during the rendering process; and performing a firmware update. In the performing of the rendering process, a program code is obtained from the first storage area and the rendering process is performed by executing the obtained program code. In the performing of the firmware update, access to the second storage area is performed based on idle time information indicating the detected idle time, where the access is related to the firmware update.

An audio output system according to the present disclosure includes an audio output device and a nonvolatile memory, where the audio output device includes: an audio output processor that performs an audio output process; an audio output process idle time detector that detects idle time that occurs during the audio output process; and a firmware update processor that performs a firmware update for controlling the audio output device. The nonvolatile memory includes a first storage area and a second storage area each of which stores firmware. The audio output processor obtains a program code from the first storage area, and performs the audio output process by executing the obtained program code. The firmware update processor performs access to the second storage area based on idle time information indicating the detected idle time, where the access is related to the firmware update.

An audio output method according to the present disclosure is to be executed by an audio output system including an audio output device and a nonvolatile memory, where the nonvolatile memory includes a first storage area and a second storage area each of which stores firmware for controlling the audio output device. The audio output method includes: performing an audio output process; detecting idle time that occurs during the audio output process; and performing a firmware update. In the performing of the audio output process, a program code is obtained from the first storage area and the audio output process is performed by executing the obtained program code. In the performing of the firmware update, access to the second storage area is performed based on idle time information indicating the detected idle time, where the access is related to the firmware update.

It should be noted that these general or specific aspects may be implemented by a system, a method, an integrated circuit, a computer program, a computer-readable recording medium such as a CD-ROM, or any combination thereof.

### [Advantageous Effects of Invention]

With the rendering system according to one aspect of the present disclosure, it is possible to prevent process interruptions in FOTA that uses a single nonvolatile memory.

### [Brief Description of Drawings]

[FIG. 1]

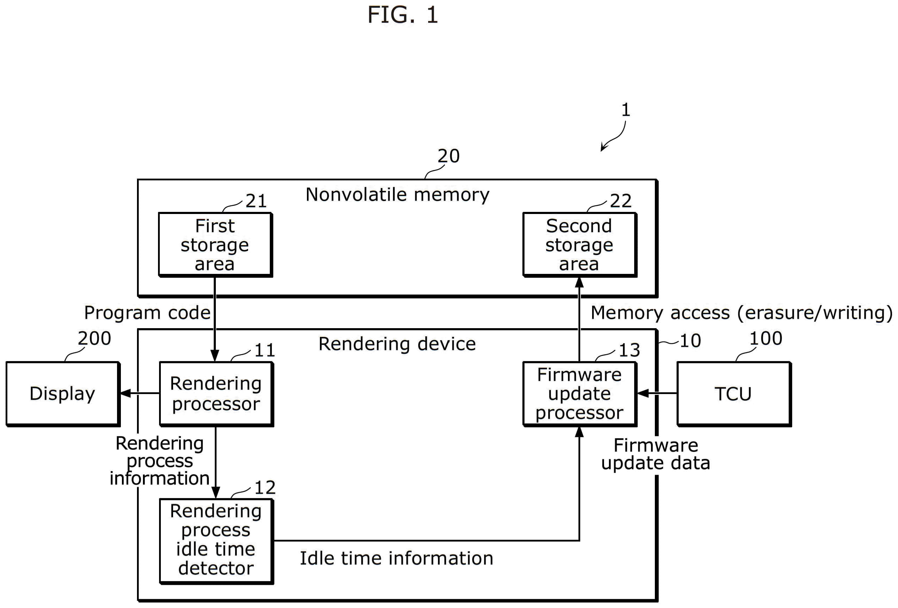

   FIG. 1 is a block diagram illustrating one example of a rendering system according to Embodiment 1.
[FIG. 2]

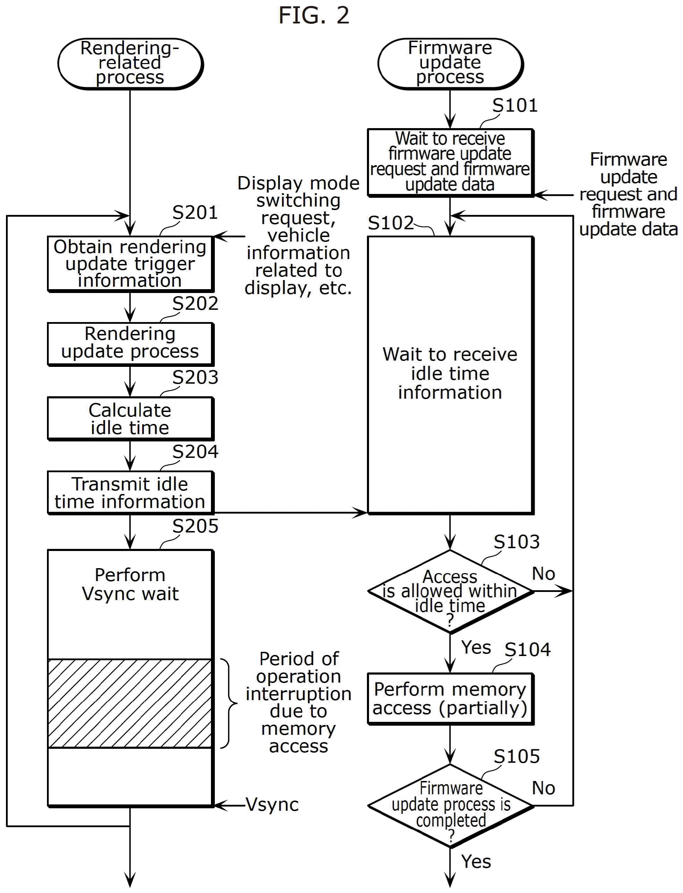

   FIG. 2 is a sequence diagram illustrating a first example of the operation of the rendering system according to Embodiment 1.
[FIG. 3]

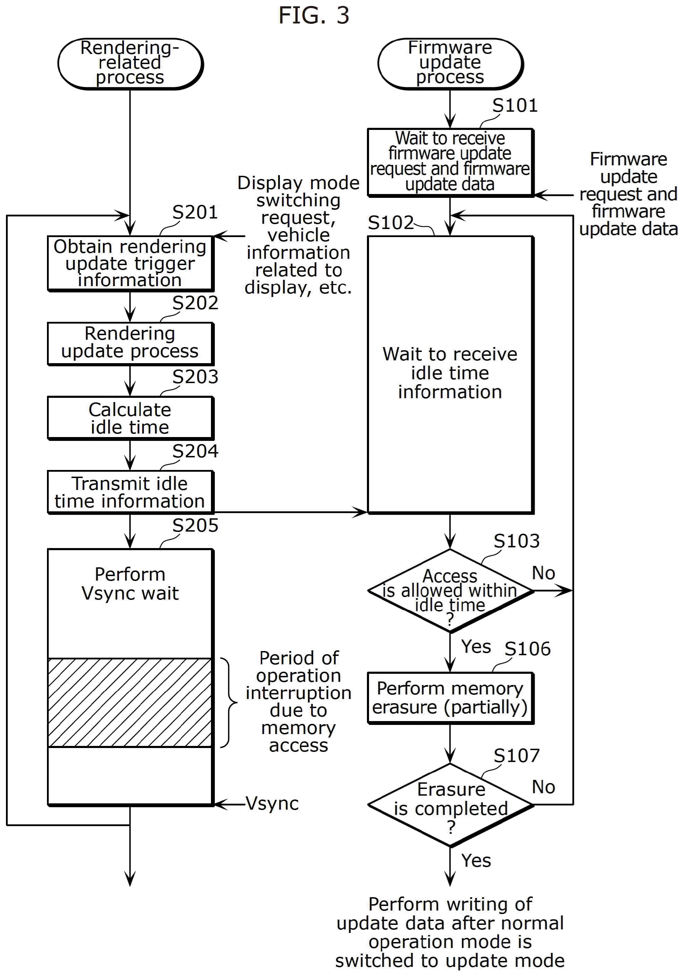

   FIG. 3 is a sequence diagram illustrating a second example of the operation of the rendering system according to Embodiment 1.
[FIG. 4]

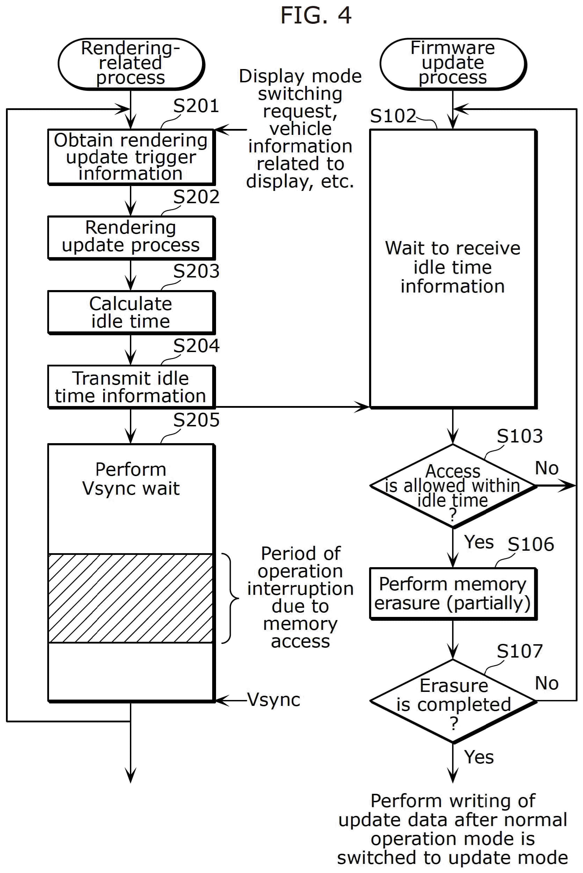

   FIG. 4 is a sequence diagram illustrating a third example of the operation of the rendering system according to Embodiment 1.
[FIG. 5]

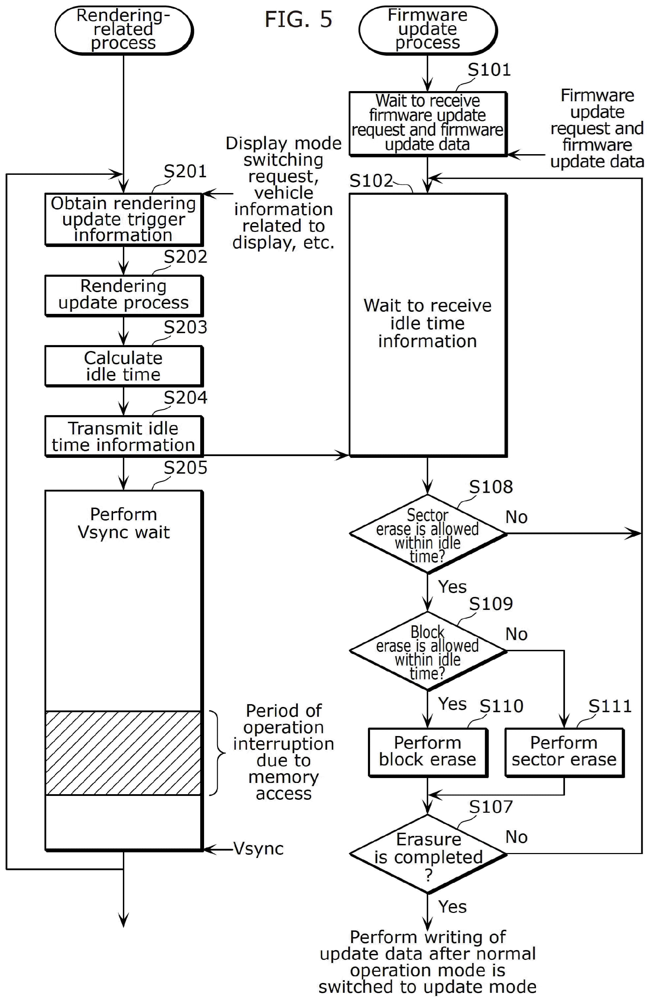

   FIG. 5 is a sequence diagram illustrating a fourth example of the operation of the rendering system according to Embodiment 1.
[FIG. 6]

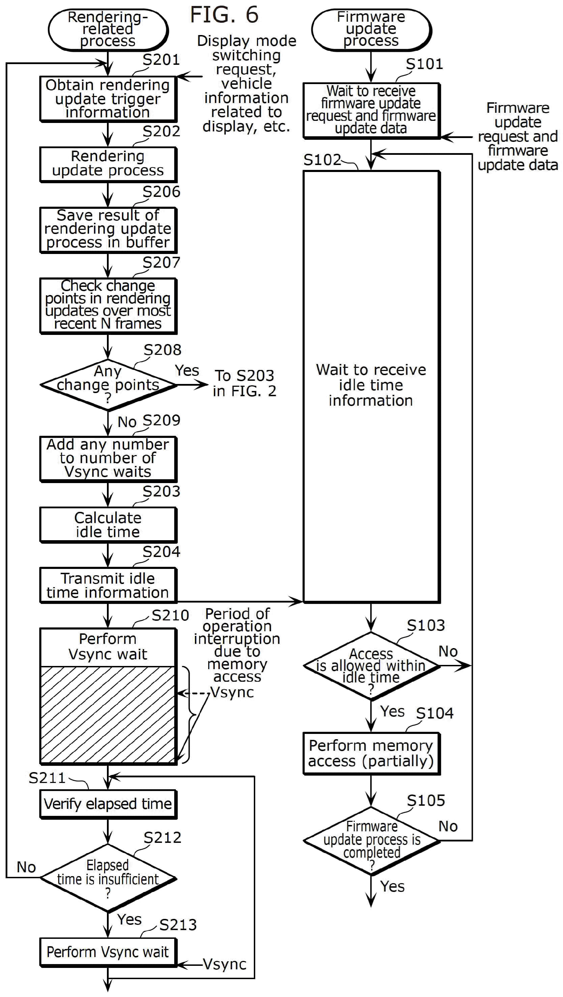

   FIG. 6 is a sequence diagram illustrating a fifth example of the operation of the rendering system according to Embodiment 1.
[FIG. 7]

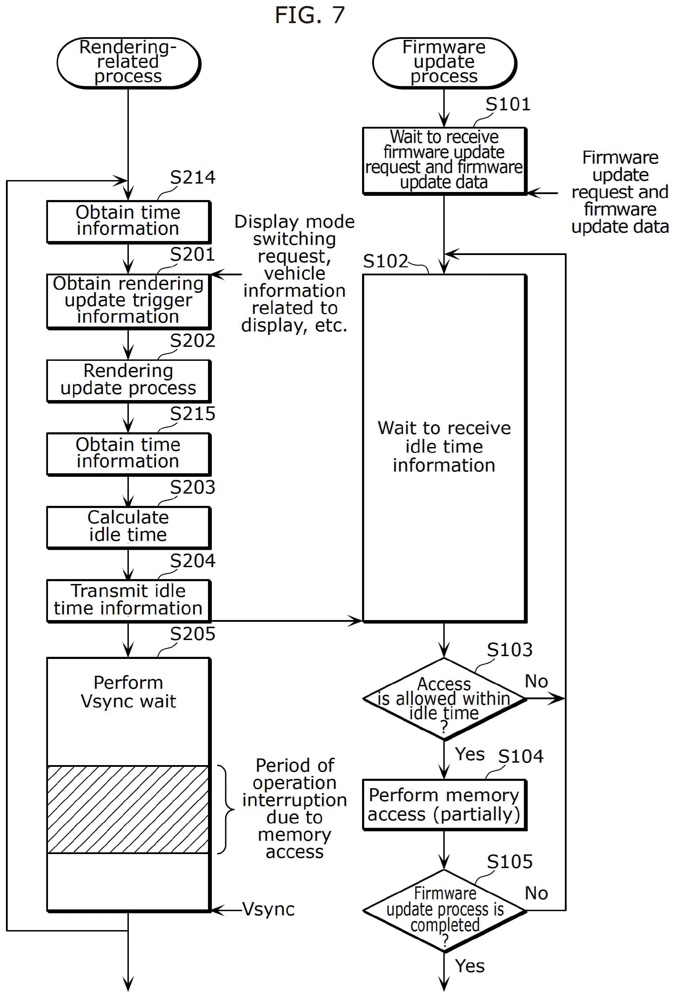

   FIG. 7 is a sequence diagram illustrating a sixth example of the operation of the rendering system according to Embodiment 1.
[FIG. 8]

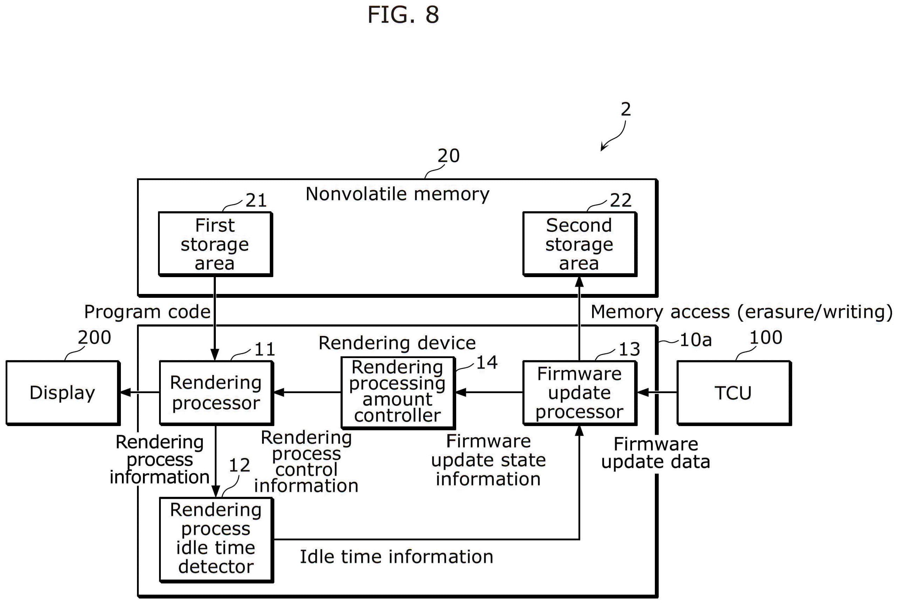

   FIG. 8 is a block diagram illustrating one example of a rendering system according to Embodiment 2.
[FIG. 9]

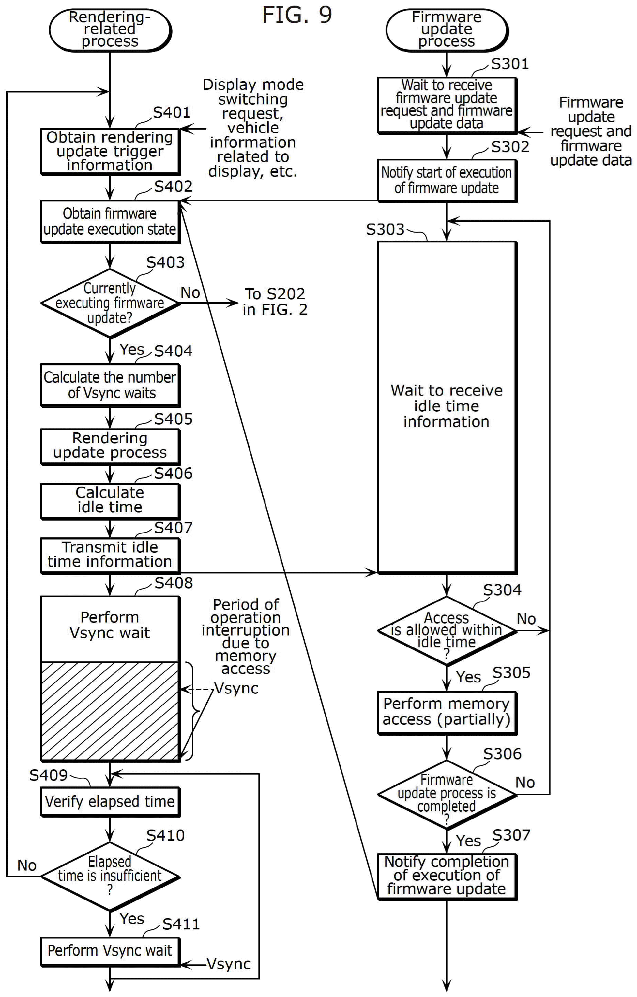

   FIG. 9 is a sequence diagram illustrating a first example of the operation of the rendering system according to Embodiment 2.
[FIG. 10]

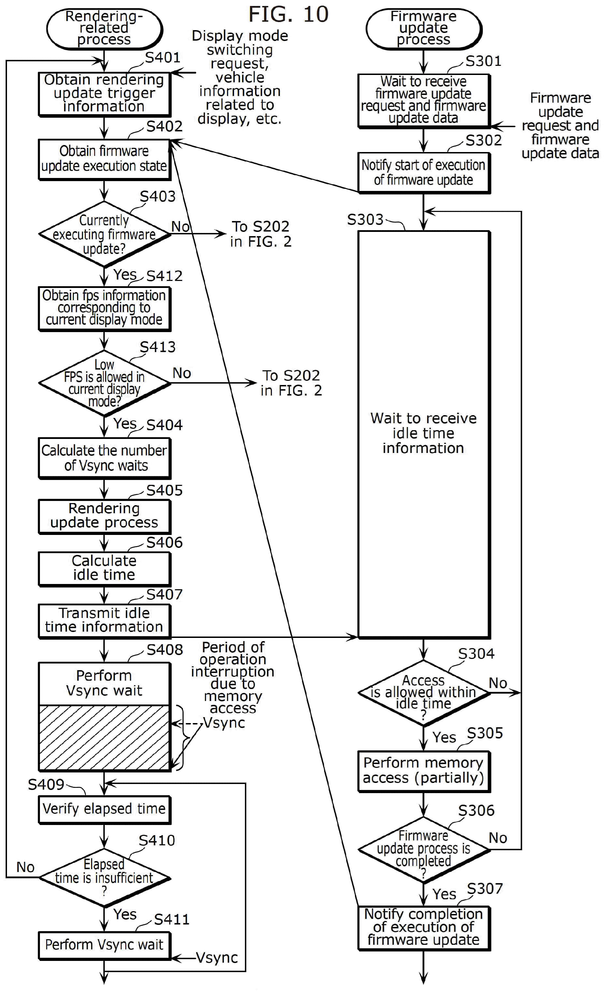

   FIG. 10 is a sequence diagram illustrating a second example of the operation of the rendering system according to Embodiment 2.
[FIG. 11]

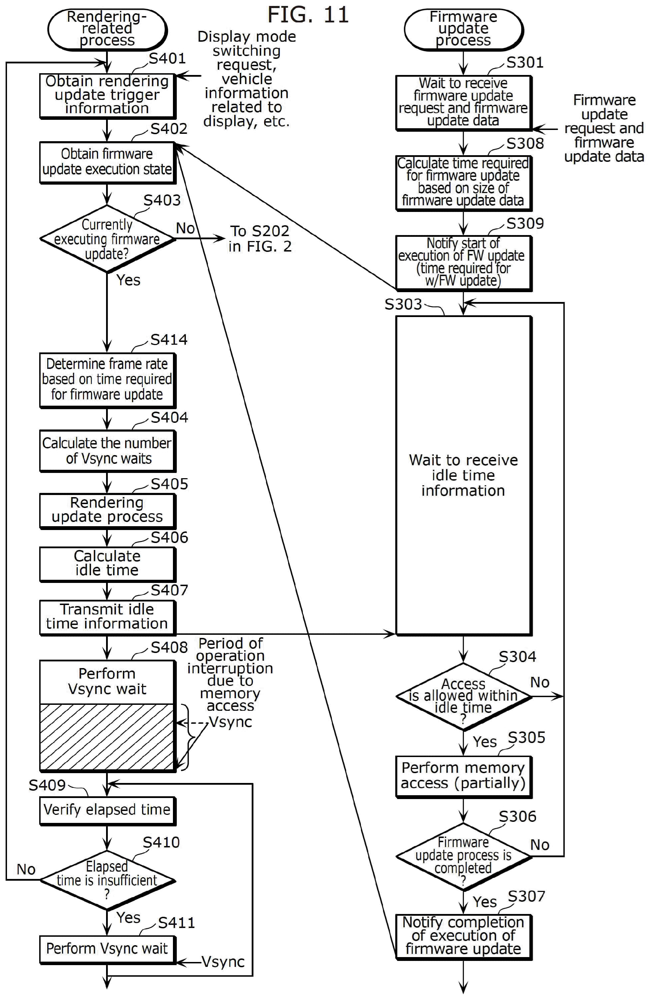

   FIG. 11 is a sequence diagram illustrating a third example of the operation of the rendering system according to Embodiment 2.
[FIG. 12]

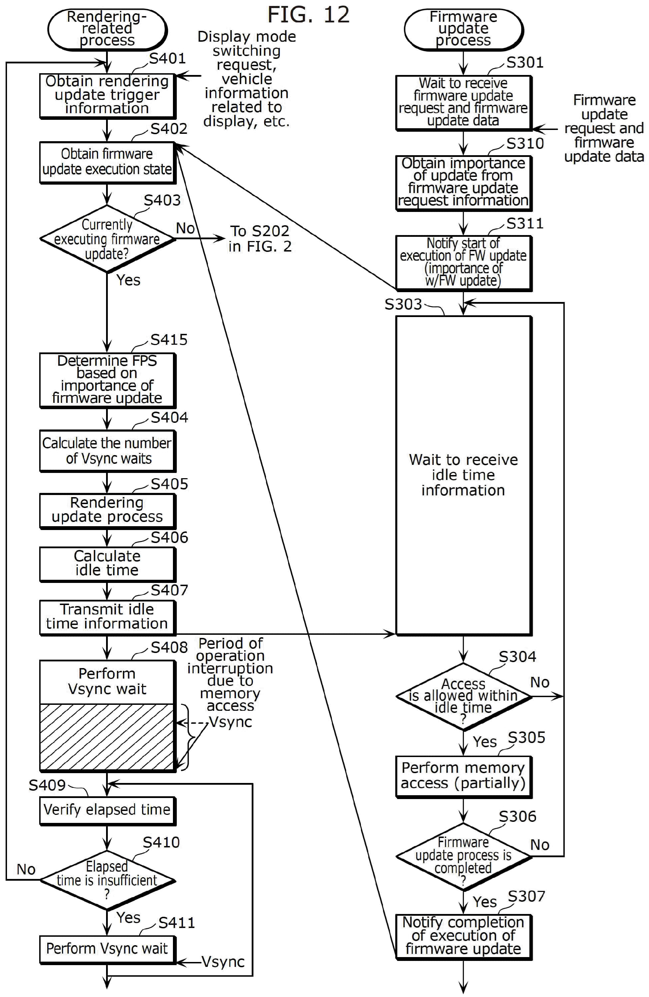

   FIG. 12 is a sequence diagram illustrating a fourth example of the operation of the rendering system according to Embodiment 2.
[FIG. 13]

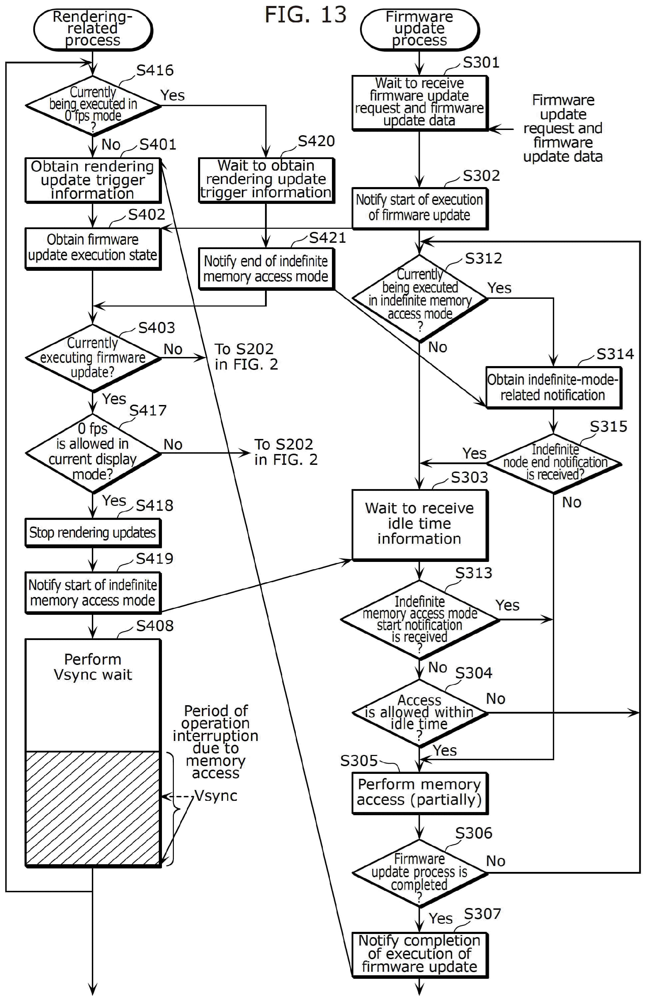

   FIG. 13 is a sequence diagram illustrating a fifth example of the operation of the rendering system according to Embodiment 2.
[FIG. 14]

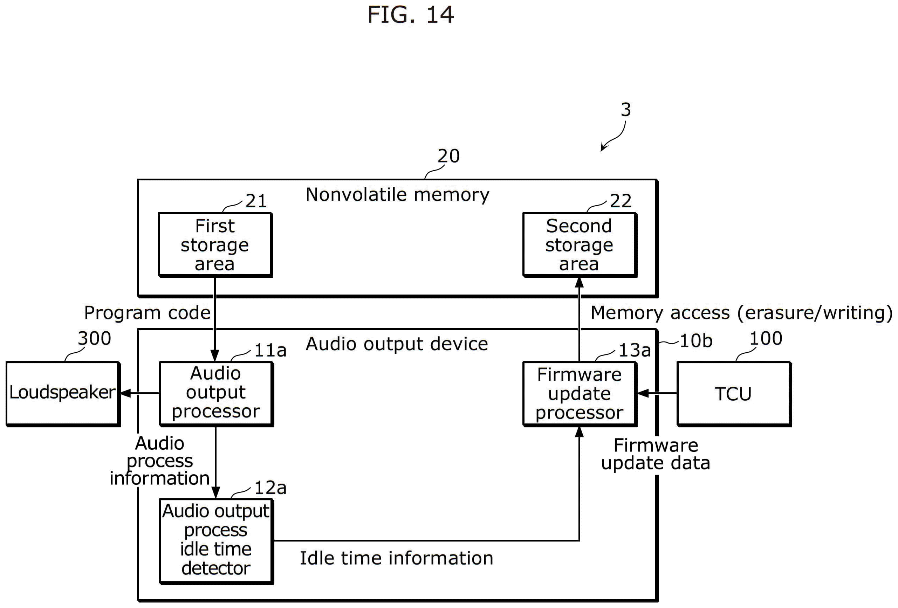

   FIG. 14 is a block diagram illustrating one example of an audio output system according to Embodiment 3.
[FIG. 15]

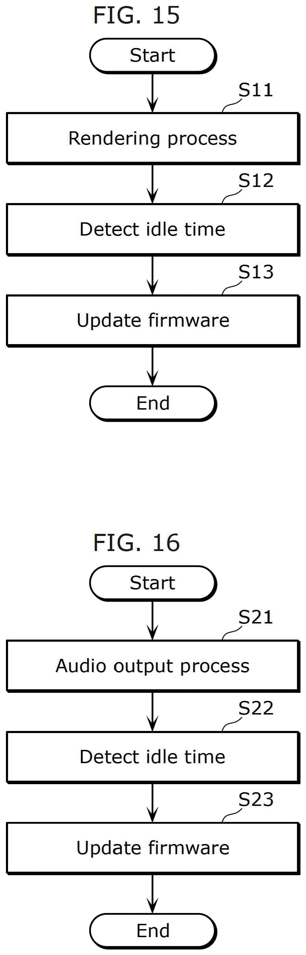

   FIG. 15 is a flowchart illustrating one example of a rendering method according to other embodiment.
[FIG. 16]
   FIG. 16 is a flowchart illustrating one example of an audio output method according to other embodiment.

### [Description of Embodiments]

Hereinafter, embodiments of the present disclosure will be described with reference to the drawings.

Note that the embodiments described below each show a general or specific example of the present disclosure. The numeral values, shapes, materials, elements, arrangement and connection of elements, steps, an order of steps, etc., indicated in the following embodiments are mere examples and are not intended to limit the scope of the present disclosure.

### [Embodiment 1]

Hereinafter, a rendering system according to Embodiment 1 will be described.

FIG. 1 is a block diagram illustrating one example of rendering system 1 according to Embodiment 1. FIG. 1 illustrates TCU 100 and display 200 besides rendering system 1. Rendering system 1 may include TCU 100 and display 200.

Rendering system 1 is a system that performs a rendering process for displaying images or videos on display 200. Display 200 is a display provided in, for example, vehicles and is, for instance, a meter display or a head-up display (HUD).

Rendering system 1 includes rendering device 10 and nonvolatile memory 20. Rendering device 10 is a device for performing a rendering process, and firmware for controlling rendering device 10 is stored in nonvolatile memory 20. The firmware stored in nonvolatile memory 20 is updated using FOTA.

Rendering device 10 includes rendering processor 11, rendering process idle time detector 12, and firmware update processor 13. Rendering device 10 is a computer including, for instance, a processor (microprocessor) and memory. The memory is, for instance, random access memory (RAM) and can store a program to be executed by the processor. Rendering processor 11, rendering process idle time detector 12, and firmware update processor 13 are implemented by, for instance, the processor executing the program stored in the memory. Nonvolatile memory 20 includes first storage area 21 and second storage area 22 each of which stores firmware. Nonvolatile memory 20 is, for example, an external read-only memory (ROM) of rendering device 10.

Rendering processor 11 performs a rendering process and displays images or videos on display 200. Specifically, rendering processor 11 obtains a program code from first storage area 21 that stores firmware, and performs the rendering process by executing the obtained program code. After the completion of an update of firmware stored in second storage area 22 to be described later, rendering processor 11 obtains a program code from second storage area 22 and performs the rendering process by executing the obtained program code.

Rendering process idle time detector 12 detects idle time that occurs during a rendering process.

Firmware update processor 13 performs a firmware update for controlling rendering device 10. Specifically, firmware update processor 13 performs access, which is related to the firmware update, to second storage area 22 based on idle time information indicating the detected idle time. The access related to the firmware update includes access to erase stored data and access to write firmware data for the firmware update. When the next firmware update occurs after the completion of the update of the firmware stored in second storage area 22, firmware update processor 13 performs access, which is related to the next firmware update, to first storage area 21.

The operations of rendering processor 11, rendering process idle time detector 12, and firmware update processor 13 will be described in detail using first to sixth examples.

First, a first example of the operation of rendering system 1 will be described with reference to FIG. 2.

FIG. 2 is a sequence diagram illustrating the first example of the operation of rendering system 1 according to Embodiment 1. An entity responsible for the rendering-related process shown in FIG. 2 is rendering processor 11 or rendering process idle time detector 12, while an entity responsible for the firmware update process shown in FIG. 2 is firmware update processor 13. The same applies to FIG. 3 through FIG. 7.

First, firmware update processor 13 waits to receive a firmware update request and firmware update data (the next firmware data) from TCU 100 (step S101). When receiving the firmware update request and the firmware update data from TCU 100, firmware update processor 13 waits to receive idle time information from rendering process idle time detector 12 (step S102).

Rendering processor 11 obtains rendering update trigger information (step S201). The rendering update trigger information is, for example, information indicating a display mode switching request or vehicle information related to a display. Specifically, when switching of HUD display modes or an update of, for instance, the speed meter of the meter display is performed, rendering processor 11 obtains rendering update trigger information.

Rendering processor 11 performs a rendering update process based on the rendering update trigger information (step S202). For example, rendering processor 11 switches between HUD display modes or updates the speed meter of the meter display in accordance with the current speed of the vehicle.

Rendering process idle-time detector 12 detects idle time that occurs during a rendering process (step S203). A time required for rendering one frame is shorter than an available rendering time between frames in accordance with the frame rate, and idle time may occur for each frame in the rendering process. The method of detecting idle time is not particularly limited; for example, there are methods such as obtaining time information in the CPU or calculating idle time based on rendering updates. One example of the idle time detection method will be described with reference to FIG. 7 that is to be described later.

Rendering process idle time detector 12 transmits idle time information indicating the detected idle time to firmware update processor 13 (step S204).

Firmware update processor 13 receives idle time information from rendering process idle time detector 12, and determines whether access to second storage area 22 is allowed within the idle time indicated by the idle time information (step S103). This is because there are cases where idle time is short and access related to a firmware update cannot be performed, such as a case where the frame rate is high. When determining that the access to second storage area 22 is not allowed within the idle time (No in step S103), firmware update processor 13 waits to receive the next idle time information (step S102). When determining that the access to second storage area 22 is allowed within the idle time (Yes in step S103), firmware update processor 13 performs memory access to second storage area 22 and partially performs the firmware update (step S104). It is difficult to complete all of the firmware update in a single idle time, and firmware update processor 13 gradually performs the firmware update using idle time that occurs for each frame.

Firmware update processor 13 determines whether the firmware update process is completed (step S105). For example, firmware update processor 13 can determine whether the firmware update process is completed by determining whether all of the received update data has been stored in second storage area 22. When determining that the firmware update process is not completed (No in step S105), firmware update processor 13 waits to receive the next idle time information (step S102) and continues the firmware update. When determining that the firmware update process is completed (Yes in step S105), firmware update processor 13 ends the firmware update process.

After transmitting the idle time information, rendering processor 11 performs Vsync wait (step S205). While firmware update processor 13 is performing memory access to second storage area 22, rendering processor 11 cannot perform operations performed by obtaining a program code from first storage area 21. However, since this memory access is performed in idle time, frames are prevented from being displayed in an incomplete rendering state.

In this way, when a rendering process is performed using the program code of the firmware stored in first storage area 21 in a single nonvolatile memory 20, idle time that occurs during the rendering process is detected, and access, which is related to a firmware update, to second storage area 22 in nonvolatile memory 20 is gradually performed in the idle time. Since the access to second storage area 22 is performed in the idle time during the rendering process, the rendering process is not interrupted, thereby preventing interruptions of the process (rendering process) in FOTA that uses a single nonvolatile memory 20. In addition, since FOTA can be achieved without using two nonvolatile memories or without using a large-capacity volatile memory, cost reduction becomes possible.

Next, a second example of the operation of rendering system 1 will be described with reference to FIG. 3.

FIG. 3 is a sequence diagram illustrating the second example of the operation of rendering system 1 according to Embodiment 1. The description of the same processes as those described in the first example of the operation of rendering system 1 is omitted, and the following will focus on the differences from the first example.

In the second example of the operation of rendering system 1, rendering device 10 has a normal operation mode and an update mode, and in the normal operation mode, rendering processor 11 performs a rendering process by executing a program code obtained from first storage area 21.

Firmware update processor 13 receives idle time information from rendering process idle time detector 12, and determines whether access to second storage area 22 is allowed within idle time indicated by the idle time information (step S103). In the second example of the operation of rendering system 1, firmware update processor 13 determines whether access to second storage area 22 for memory erasure is allowed within the idle time. When determining that the access for memory erasure is allowed within the idle time (Yes in step S103), firmware update processor 13 performs memory access to second storage area 22 and partially performs memory erasure (step S106). It is difficult to perform all of the memory erasure for a firmware update during a single idle time, and firmware update processor 13 gradually performs the memory erasure using idle time that occurs for each frame.

Firmware update processor 13 determines whether memory erasure necessary for the firmware update process is completed (step S107). When determining that the memory erasure is not completed (No in step S107), firmware update processor 13 waits to receive the next idle time information (step S102) and continues the memory erasure. When determining that the memory erasure is completed (Yes in step S107), firmware update processor 13 performs writing of update data after the normal operation mode is switched to the update mode.

In this way, in the normal operation mode, firmware update processor 13 erases at least a part of data stored in second storage area 22 based on idle time information, and writes firmware data for a firmware update into second storage area 22. By thus having gradually erased the data stored in second storage area 22 (e.g., the old version of the firmware) during idle time in the background in the normal operation mode, it is possible to reduce the process time of the firmware update performed after the normal operation mode is switched to the update mode.

Next, a third example of the operation of rendering system 1 will be described with reference to FIG. 4.

FIG. 4 is a sequence diagram illustrating the third example of the operation of rendering system 1 according to Embodiment 1. The description of the same processes as those described in the second example of the operation of rendering system 1 will be omitted, and the following will focus on the differences from the second example.

As illustrated in FIG. 4, in the third example of the operation of rendering system 1, firmware update processor 13 waits to receive idle time information without waiting to receive a firmware update request and firmware update data from TCU 100. In other words, in the normal operation mode, after (e.g., immediately after) a rendering process is started by executing a program code obtained from first storage area 21, firmware update processor 13 erases at least a part of data stored in second storage area 22 based on the idle time information regardless of whether the next firmware update request is received or whether the next firmware data is received. When firmware update processor 13 receives a firmware update request during the erasure process, the normal operation mode may be shifted to the update mode. After the shift to the update mode, the same processes as those described in the second example of the operation of rendering system 1 according to Embodiment 1 are performed.

In this way, data stored in second storage area 22 may be gradually erased during idle time in the background in the normal operation mode, regardless of whether the next firmware update request is received or whether the next firmware data is received. This can reduce the rewrite time of rewriting data in second storage area 22 after switching to the update mode.

Next, a fourth example of the operation of rendering system 1 will be described with reference to FIG. 5.

FIG. 5 is a sequence diagram illustrating the fourth example of the operation of rendering system 1 according to Embodiment 1. The description of the same processes as those described in the first example of the operation of rendering system 1 will be omitted, and the following will focus on the differences from the first example.

Firmware update processor 13 receives idle time information from rendering process idle time detector 12 and determines whether sector erase is allowed within idle time indicated by the idle time information (step S108). When determining that sector erase cannot be performed within the idle time (No in step S108), firmware update processor 13 waits to receive the next idle time information (step S102).

When determining that sector erase is allowed within the idle time (Yes in step S108), firmware update processor 13 determines whether block erase is allowed within the idle time (step S109). Block erase is a method of erasing more data than sector erase and it takes a longer time to erase data. Firmware update processor 13 performs block erase (step S110) when determining that the block erase is allowed within the idle time (Yes in step S109), and performs sector erase (step S111) when determining that the block erase is not allowed within the idle time (No in step S109).

In this way, firmware update processor 13 determines the method of erasing data stored in second storage area 22 based on the length of the idle time indicated by idle time information. Since the size of data erasable in a single idle time varies depending on the length of the idle time, it is possible to select the erasure method, such as sector erase or block erase, according to the length of the idle time. For example, since the erasure time of the block erase per size is generally shorter than the erasure time of the sector erase per size, data can be erased more effectively using the block erase.

Next, a fifth example of the operation of rendering system 1 will be described with reference to FIG. 6.

FIG. 6 is a sequence diagram illustrating the fifth example of the operation of rendering system 1 according to Embodiment 1. The description of the same processes as those described in the first example of the operation of rendering system 1 will be omitted, and the following will focus on the differences from the first example.

After performing the rendering update process, rendering processor 11 saves the result of the rendering update process in the buffer (step S206), checks change points in rendering updates over the most recent N frames (N is an integer of 2 or greater) (step S207), and determines whether there are any change points (step S208). In other words, rendering processor 11 determines whether similar contents are displayed in the most recent N frames.

When determining that there are change points (Yes in step S208), rendering processor 11 performs the process in step S203 and the subsequent processes in FIG. 2. In other words, the same processes as described in the first example of the operation of rendering system 1 are performed thereafter. When determining that there are no change points (No in step S208), rendering processor 11 adds a predetermined number to the Vsync wait count. The predetermined number is not particularly limited and may be any number. In other words, the rendering process is skipped for the predetermined number of subsequent frames.

Rendering process idle time detector 12 detects idle time including time according to the added number of Vsync waits (step S203), and transmits idle time information to firmware update processor 13 (step S204).

Rendering processor 11 performs Vsync waits over times including the added number of times (step S210). Rendering processor 11 verifies elapsed time during the Vsync waits (step S211), continues the Vsync waits (step S213) when the elapsed time is insufficient (Yes in step S212), ends the Vsync waits for the added number of times when the elapsed time is not insufficient (No in step S212), and obtains the next rendering update trigger information (step S201).

In this way, rendering processor 11 calculates the amount of change in the drawing contents of the most recent predetermined number of frames, and when the amount of change is less than or equal to a predetermined amount, skips the rendering process for a predetermined number of subsequent frames. When the amount of change is not observed or observed little in the drawing contents of the most recent predetermined number of frames, it is possible to skip the rendering process for any number of subsequent frames since the same or almost same content is displayed. Accordingly, idle time can be increased by that amount, and since an access amount to second storage area 22 can be increased, a firmware update can be performed in a short time.

Next, a sixth example of the operation of rendering system 1 will be described with reference to FIG. 7.

FIG. 7 is a sequence diagram illustrating the sixth example of the operation of rendering system 1 according to Embodiment 1. The description of the same processes as those described in the first example of the operation of rendering system 1 will be omitted, and the following will focus on the differences from the first example.

Rendering processor 11 obtains time information when obtaining rendering update trigger information (step S214). In other words, rendering processor 11 obtains the start time of the rendering process for a given frame (referred to as a first frame).

Rendering processor 11 obtains time information again after performing a rendering update process for the first frame (step S215). Rendering processor 11 transmits the time information obtained in step S214 and the time information obtained in step S215 to rendering process idle time detector 12.

Rendering process idle time detector 12 can calculate a rendering process time required for the rendering process for the first frame by calculating a time from the time obtained in step S214 until the time obtained in step S215. Rendering process idle-time detector 12 detects idle time that occurs during the rendering process for the first frame by calculating the difference between an available rendering time that is a time from the start time of the rendering process for the first frame until the start time of the rendering process for a second frame subsequent to the first frame (step S203). The available rendering time can be calculated based on the rendering performance (frame rate) of the rendering process.

In this way, after the rendering process for the first frame is completed, a time until the start time of the next second frame becomes idle time. Accordingly, the idle time can be calculated based on the difference between (i) the available rendering time between the start time of the first frame and the start time of the next second frame and (ii) the rendering process time required for the rendering process for the first frame.

Note that processes in two or more examples among the first to sixth examples of the operation of rendering system 1 can be combined.

### [Embodiment 2]

Next, a rendering system according to Embodiment 2 will be described.

FIG. 8 is a block diagram illustrating one example of rendering system 2 according to Embodiment 2.

Rendering system 2 according to Embodiment 2 includes rendering device 10a instead of rendering device 10, which is different from rendering system 1 according to Embodiment 1. Rendering device 10a includes also rendering processing amount controller 14, which is different from rendering device 10. The following will focus on the differences from Embodiment 1.

Rendering processing amount controller 14 controls the processing amount of a rendering process. Specifically, firmware update processor 13 notifies rendering processing amount controller 14 of update state information indicating the state of a firmware update, and rendering processing amount controller 14 controls the processing amount of the rendering process based on the update state information. The control of the processing amount of the rendering process is, for example, control performed to reduce the frame rate.

The details of the operation of rendering processor 11, rendering process idle time detector 12, firmware update processor 13, and rendering processing amount controller 14 will be described with reference to first to fifth examples.

First, a first example of the operation of rendering system 2 will be described with reference to FIG. 9.

FIG. 9 is a sequence diagram illustrating the first example of the operation of rendering system 2 according to Embodiment 2. An entity responsible for the rendering-related process shown in FIG. 9 is rendering processor 11, rendering process idle time detector 12, or rendering processing amount controller 14, while an entity responsible for the firmware update process is firmware update processor 13. The same applies to FIG. 10 through FIG. 13.

First, firmware update processor 13 waits to receive a firmware update request and firmware update data (the next firmware data) from TCU 100 (step S301). When the firmware update request and the firmware update data are received form TCU 100, firmware update processor 13 notifies rendering processing amount controller 14 of update execution state information indicating the start of the execution of the firmware update, i.e., update execution state information indicating the start of the execution of the access to second storage area 22 (step S302).

Rendering processor 11 obtains rendering update trigger information (step S401).

Rendering processing amount controller 14 obtains update execution state information of the firmware (step S402), and determines whether firmware update processor 13 is currently executing a firmware update (step S403). When obtaining the update execution state information indicating the start of the execution of the firmware update, rendering processing amount controller 14 can determine that firmware update processor 13 is currently executing the firmware update.

When determining that firmware update processor 13 is currently executing the firmware update (Yes in step S403), rendering processing amount controller 14 calculates the number of Vsync waits (step S404). For example, it is assumed that when the normal frame rate is 60 fps, the number of Vsync waits is set to 1. In this case, when the number of Vsync waits is changed to 2, the frame rate can be reduced to 30 fps, and when the number of Vsync waits is changed to 4, the frame rate can be reduced to 15 fps. In this way, the number of Vsync waits in accordance with a target frame rate is calculated. The target frame rate in the execution of the firmware update may be set in advance, or dynamically set as in third and fourth examples of the operation of rendering system 2 that are to be described later.

Rendering processor 11 performs a rendering update process based on the rendering update trigger information (step S405).

Rendering process idle time detector 12 detects idle time that occurs during a rendering process (step S406). The method of detecting idle time is not particularly limited, but idle time can be detected using the method described with reference to FIG. 7, as is the case described in Embodiment 1. When the number of Vsync waits is increased, the frame rate decreases and idle time becomes longer than usual.

Rendering process idle time detector 12 transmits idle time information indicating the detected idle time to firmware update processor 13 (step S407).

Firmware update processor 13 waits to receive the idle time information from rendering process idle time detector 12 (step S303), and when receiving the idle time information, determines whether access to second storage area 22 is allowed within the idle time indicated by the idle time information (step S304). When determining that the access to second storage area 22 is not allowed within the idle time (No in step S304), firmware update processor 13 waits to receive the next idle time information (step S303). When determining that the access to second storage area 22 is allowed within the idle time (Yes in step S304), firmware update processor 13 performs memory access to second storage area 22 and partially executes a firmware update (step S305).

Firmware update processor 13 determines whether the firmware update process is completed (step S306). When determining that the firmware update process is not completed (No in step S306), firmware update processor 13 waits to receive the next idle time information (step S303) and continues the firmware update. When determining that the firmware update process is completed (Yes in step S306), firmware update processor 13 notifies rendering processing amount controller 14 of update execution state information indicating the completion of the execution of the firmware update (step S307).

Rendering processor 11 performs Vsync waits for the calculated number of Vsync waits (step S408). While firmware update processor 13 is executing memory access to second storage area 22, rendering processor 11 cannot perform operations performed by obtaining a program code from first storage area 21. However, since the memory access is performed in idle time, frames can be prevented from being displayed in an incomplete state. Rendering processor 11 verifies elapsed time during the Vsync waits (step S409). When the elapsed time is insufficient (Yes in step S410), rendering processor 11 continues the Vsync waits (step S411). When the elapsed time is not insufficient (No in step S410), rendering processor 11 ends the Vsync waits for the calculated number of Vsync waits and obtains the next rendering update trigger information (step S401).

When obtaining the update execution state information indicating the completion of the execution of the firmware update in step S402, rendering processing amount controller 14 can determine, in step S403, that firmware update processor 13 is not currently executing a firmware update.

When determining that firmware update processor 13 is not currently executing a firmware update (No in step S403), rendering processing amount controller 14 performs the process in step S202 and the subsequent processes in FIG. 2. In other words, the same processes as those described in the first example of the operation of rendering system 1 according to Embodiment 1 are performed thereafter. Namely, after the Vsync wait count is reset, a rendering update process is performed. When the normal frame rate is 60 fps, for example, the rendering update process is performed after the Vsync wait count is reset to 1.

There are cases where idle time is reduced in the operation performed at a high frame rate such as 60 fps, which makes it difficult to detect the idle time. In contrast, control of the processing amount of a rendering process, such as frame rate control, is performed in accordance with the state of the firmware update. For example, idle time can be increased by reducing the frame rate when a firmware update is about to start, and as a result, the firmware update process can be advanced.

Next, a second example of the operation of rendering system 2 will be described with reference to FIG. 10.

FIG. 10 is a sequence diagram illustrating the second example of the operation of rendering system 2 according to Embodiment 2. The description of the same processes as those described in the first example of the operation of rendering system 2 will be omitted, and the following will focus on the differences from the first example.

In the second example of the operation of rendering system 2, rendering device 10a stores a processing amount adjustment feasibility table in which a drawing scene (also referred to as a display mode) is associated with whether adjustment in a processing amount is allowed. For example, in the processing amount adjustment feasibility table, each of drawing scenes is associated with whether adjustment in the processing amount is allowed. Stated differently, in the processing amount adjustment feasibility table, each of the drawing scenes is associated with whether low FPS is allowed. Specifically, the processing amount adjustment feasibility table includes information such that the frame rate of a given drawing scene must be 60 fps or information such that the frame rate of another drawing scene must be at least 15 fps.

When the update execution state information indicating the start of the execution of the access to second storage area 22 is notified by firmware update processor 13 (Yes in step S403), rendering processing amount controller 14 obtains FPS information corresponding to the current display mode (step S412), and determines whether low FPS is allowed in the current display mode (step S413). In other words, rendering processing amount controller 14 determines whether adjustment in the processing amount for the current drawing scene is allowed based on the processing amount adjustment feasibility table.

When determining that low FPS is allowed in the current display mode, i.e., adjustment in the processing amount for the current drawing scene is allowed (Yes in step S413), rendering processing amount controller 14 calculates the number of Vsync waits (step S404). This enables control of reducing the frame rate in the rendering process, as is the case described in the first example of the operation of rendering system 2.

When determining that low FPS is not allowed in the current display mode, i.e., adjustment in the processing amount for the current drawing scene is not allowed (No in step S413), rendering processing amount controller 14 performs the process in step S202 and the subsequent processes in FIG. 2. In other words, the same processes as those described in the first example of the operation of rendering system 1 according to Embodiment 1 are performed thereafter.

For example, there are cases where it is better not to reduce the frame rate, depending on the drawing scene. In view of this, by storing a processing amount adjustment feasibility table in advance, whether adjustment in the processing amount for the current drawing scene is allowed can be determined by referring to the processing amount adjustment feasibility table, thereby reducing the frame rate for only a drawing scene for which adjustment in the processing amount is allowed.

Next, a third example of the operation of rendering system 2 will be described with reference to FIG. 11.

FIG. 11 is a sequence diagram illustrating the third example of the operation of rendering system 2 according to Embodiment 2. The description of the same processes as those described in the first example of the operation of rendering system 2 will be omitted, and the following will focus on the differences from the first example.

When receiving a firmware update request and firmware update data from TCU 100, firmware update processor 13 calculates a time required for a firmware update based on the size of the firmware update data (step S308). Since the time required for a firmware update (the total amount of time necessary for erasure and writing) varies depending on the size of the firmware update data, the time required for a firmware update can be calculated based on the size. Firmware update processor 13 then notifies rendering processing amount controller 14 of information indicating the time required for a firmware update, together with update execution state information indicating the start of the execution of the firmware update, i.e., update execution state information indicating the start of the execution of the access to second storage area 22.

When the update execution state information indicating the start of the execution of the access to second storage area 22 is notified by firmware update processor 13 (Yes in step S403), rendering processing amount controller 14 controls the processing amount (frame rate) of the rendering process based on the time required for the firmware update (step S414). This allows the processing amount of the rendering process to be in accordance with the time required for the firmware update. When the firmware update takes longer than a certain amount of time, for example, reducing the frame rate can allow the firmware update to be performed in as short a time as possible.

Next, a fourth example of the operation of rendering system 2 will be described with reference to FIG. 12.

FIG. 12 is a sequence diagram illustrating the fourth example of the operation of rendering system 2 according to Embodiment 2. The description of the same processes as those described in the first example of the operation of rendering system 2 will be omitted, and the following will focus on the differences from the first example.

When receiving a firmware update request and firmware update data from TCU 100, firmware update processor 13 obtains the importance of a firmware update from firmware update request information (step S310). Depending on the content of the firmware update, some updates are important while others are not, and the firmware update request information includes the importance of the update. Firmware update processor 13 notifies rendering processing amount controller 14 of information indicating the importance of a firmware update, together with update execution state information indicating the start of the execution of the firmware update, i.e., update execution state information indicating the start of the execution of the access to second storage area 22 (step S311).

When the update execution state information indicating the start of the execution of the access to second storage area 22 is notified by firmware update processor 13 (Yes in step S403), rendering processing amount controller 14 controls the processing amount (frame rate) of the rendering process based on the importance of a firmware update (step S415). If the update is important, the update is desired to be completed in a short time in many cases, therefore, a firmware update whose importance is high can be performed in a short time by reducing the frame rate.

Next, a fifth example of the operation of rendering system 2 will be described with reference to FIG. 13.

FIG. 13 is a sequence diagram illustrating the fifth example of the operation of rendering system 2 according to Embodiment 2. The description of the same processes as those described in the first example of the operation of rendering system 2 will be omitted, and the following will focus on the differences.

In the fifth example of the operation of rendering system 2, rendering device 10a stores a rendering update feasibility table in which a drawing scene is associated with whether a rendering update is allowed. For example, depending on the drawing scene, there are cases where a rendering update is not necessary, and the rendering update feasibility table includes information indicating a drawing scene that does not require a rendering update.

Rendering processor 11 determines whether the rendering process is currently being executed in 0 fps mode (step S416). The 0 fps mode will be described later. When determining that the rendering process is not currently being executed in the 0 fps mode (No in step S416), rendering processor 11 performs steps S401 to S403, as is the case described in the first example of the operation of rendering system 2.

When the update execution state information indicating the start of the execution of the access to second storage area 22 is notified by firmware update processor 13 (Yes in step S403), rendering processing amount controller 14 determines whether 0 fps is allowed in the current display mode (step S417). In other words, rendering processing amount controller 14 determines whether a rendering update is necessary for the current drawing scene based on the rendering update feasibility table. For example, since there is no need to update the drawing of the speed meter while the vehicle is stopped, it is determined that a rendering update is unnecessary for, for instance, the drawing scene of the speed meter while the vehicle is stopped.

When it is determined that 0 fps is allowed in the current display mode, i.e., a rendering update is unnecessary for the current drawing scene (Yes in step S417), the rendering processor stops rendering updates until the current drawing scene is a drawing scene that requires a rendering update (step S418). The 0 fps mode is a mode to stop rendering updates.

Since rendering updates are stopped and memory access is indefinitely allowed while the rendering updates are stopped, rendering process idle time detector 12 notifies firmware update processor 13 of the start of the indefinite memory access mode (step S419).

In contrast, when it is determined that 0 fps is not allowed in the current display mode, i.e., a rendering update is necessary for the current drawing scene (No in step S417), rendering processing amount controller 14 performs the process in step S202 and the subsequent processes in FIG. 2. In other words, the same processes as those described in the first example of the operation of rendering system 1 according to Embodiment 1 are performed thereafter.

After notifying rendering processing amount controller 14 of the update execution state information indicating the start of the execution of a firmware update, firmware update processor 13 determines whether a rendering process is currently being executed in the indefinite memory access mode (step S312).

When determining that the rendering process is not currently being executed in the indefinite memory access mode (No in step S312), firmware update processor 13 waits to receive idle time information from rendering process idle time detector 12 (step S303).

Firmware update processor 13 determines whether an indefinite memory access mode start notification is received as idle time information (step S313). When the indefinite memory access mode start notification is received (Yes in step S313), firmware update processor 13 performs memory access to second storage area 22 (step S305) since rendering updates are currently stopped and memory access is allowed indefinitely.

When the rendering process is currently being executed in the 0 fps mode (Yes in step S416), i.e., when the rendering process is stopped, rendering processor 11 waits to obtain rendering update trigger information (step S420). When the current drawing scene is a drawing scene that requires a rendering update, rendering processor 11 ends the indefinite memory access mode after the rendering update trigger information is notified, and rendering process idle time detector 12 notifies firmware update processor 13 of the end of the indefinite memory access mode (step S421).

When determining that the rendering process is currently being executed in the indefinite memory access mode (Yes in step S312), firmware update processor 13 obtains an indefinite-mode-related notification (step S314). The indefinite-mode-related notification is, for example, a notification of the end of the indefinite memory access mode. When there is no notification of the end of the indefinite memory access mode, the process in step S314 need not be performed.

Firmware update processor 13 determines whether an indefinite memory access mode end notification is received (step S315). When no indefinite memory access mode end notification is received (No in step S315), firmware update processor 13 continues performing memory access to second storage area 22 (step S305). When an indefinite memory access mode end notification is received (Yes in step S315), firmware update processor 13 waits to receive idle time information from rendering process idle time detector 12 (step S303). In other words, a firmware update process that is performed when the mode is not an indefinite memory access mode is performed thereafter.

In this way, there are cases where a rendering update is not necessary, depending on the drawing scene. In view of this, when the current drawing scene is a drawing scene that does not require a rendering update, idle time can be increased by stopping rendering updates until the current drawing scene is a drawing scene that requires a rendering update. As a result, it is possible to increase an access amount to second storage area 22, enabling a firmware update in a short time.

It should be noted that processes in two or more examples of the first to fifth examples of the operation of rendering system 2 can be combined. Processes in the first to fifth examples of the operation of rendering system 2 can be combined with processes in two or more examples in the second to sixth examples of the operation described in Embodiment 1.

### [Embodiment 3]

Next, an audio output system according to Embodiment 3 will be described.

FIG. 14 is a block diagram illustrating one example of audio output system 3 according to Embodiment 3. FIG. 14 illustrates TCU 100 and loudspeaker 300 besides audio output system 3. Audio output system 3 may include TCU 100 and loudspeaker 300.

Audio output system 3 is a system that performs an audio output process for outputting audio to loudspeaker 300. Loudspeaker 300 is provided in, for example, vehicles.

Audio output system 3 includes audio output device 10b and nonvolatile memory 20. Audio output device 10b is a device for performing an audio output process, and firmware for controlling audio output device 10b is stored in nonvolatile memory 20. The firmware stored in nonvolatile memory 20 is updated using FOTA.

Audio output device 10b includes audio output processor 11a, audio output process idle time detector 12a, and firmware update processor 13a. Audio output device 10b is a computer including a processor (microprocessor) and memory. The memory is, for instance, RAM and can store a program to be executed by the processor. Audio output processor 11a, audio output process idle time detector 12a, and firmware update processor 13a are implemented by, for instance, the processor executing the program stored in the memory.

Audio output processor 11a performs an audio output process and outputs audio to loudspeaker 300. Specifically, audio output processor 11a obtains a program code from first storage area 21 that stores firmware and performs the audio output process by executing the obtained program code. After completion of the update of the firmware stored in second storage area 22, audio output processor 11a obtains a program code from second storage area 22 and performs the audio output process by executing the obtained program code.

Audio output process idle time detector 12a detects idle time that occurs during the audio output process. Audio output process idle time detector 12a detects, for example, a silent period or the like.

Firmware update processor 13a performs a firmware update for controlling audio output device 10b. Specifically, firmware update processor 13a performs access, which is related to the firmware update, to second storage area 22 based on idle time information indicating the detected idle time. Since the operation of firmware update processor 13a is the same as the operation of firmware update processor 13 according to Embodiment 1, description is omitted.

The present disclosure can be applied not only to the rendering system but also to audio output system 3. Idle time that occurs during an audio output process is detected when the audio output process is performed using the program code of firmware stored in first storage area 21 in a single nonvolatile memory 20, and access, which is related to a firmware update, to second storage area 22 is gradually performed in the idle time. Since the audio output process is not interrupted owing to the access to second storage area 22 being performed in the idle time during the audio output process, it is possible to prevent interruptions of the process (audio output process) in FOTA that uses a single nonvolatile memory 20.

### (Other Embodiments)

As described above, the embodiments are described as examples of technologies according to the present disclosure. The technologies according to the present disclosure, however, are not limited to these, and are also applicable to embodiments to which changes, replacements, additions, and omissions are made where necessary. For example, variations as described below are also included in the embodiments of the present disclosure.

For example, the present disclosure can be implemented not only as a rendering system, but also as a rendering method including steps (processes) to be performed by the elements included in the rendering system.

FIG. 15 is a flowchart illustrating one example of a rendering method according to other embodiment.

A rendering method is to be executed by a rendering system including a rendering device and a nonvolatile memory, where the nonvolatile memory includes a first storage area and a second storage area each of which stores firmware for controlling the rendering device. As illustrated in FIG. 15, the rendering method includes: performing a rendering process (step S11); detecting idle time that occurs during the rendering process (step S12); and performing a firmware update (step S13). In the performing of the rendering process, a program code is obtained from the first storage area and the rendering process is performed by executing the obtained program code. In the performing of the firmware update, access to the second storage area is performed based on idle time information indicating the detected idle time, where the access is related to the firmware update.

For example, the present disclosure can be implemented not only as an audio output system, but also as an audio output method including steps (processes) performed by the elements included in the audio output system.

FIG. 16 is a flowchart illustrating one example of an audio output method according to other embodiment.

Au audio output method is to be executed by an audio output system including a rendering device and a nonvolatile memory, where the nonvolatile memory includes a first storage area and a second storage area each of which stores firmware for controlling the audio output device. As illustrated in FIG. 16, the audio output method includes: performing an audio output process (step S21); detecting idle time that occurs during the audio output process (step S22); and performing a firmware update (step S23). In the performing of the audio output process, a program code is obtained from the first storage area and the audio output process is performed by executing the obtained program code. In the performing of the firmware update, access to the second storage area is performed based on idle time information indicating the detected idle time, where the access is related to the firmware update.

The present disclosure can be implemented as, for example, a program for causing a computer (processor) to execute steps included in the rendering method or audio output method. Moreover, the present disclosure can be implemented as a non-transitory computer-readable recording medium, such as a CD-ROM, on which the program is recorded.

When the present disclosure is implemented using a program (software), for example, each step is executed by executing the program utilizing hardware resources such as the CPU, memory, and input/output circuit of the computer. In other words, each step is executed by the CPU obtaining and computing data from, for instance, the memory or input/output circuit and outputting the computing results to the memory or input/output circuit.

In the aforementioned embodiment, each element included in the rendering system or audio output system may be configured by dedicated hardware or implemented by executing a software program suitable for the element. Each element may be implemented by a program executor such as a CPU or processor reading and executing the software program recorded on a recording medium such as a hard disk or semiconductor memory.

Some or all of the functions of the rendering system or audio output system according to the aforementioned embodiment are implemented as LSI that is typically an integrated circuit. These may take the form of individual chips, or may be partially or entirely packaged into a single chip. The method for implementing the integrated circuit is not limited to LSI, and the circuit may be implemented using a dedicated circuit or a generic processor. A field programmable gate array (FPGA) capable of post-production programming or a reconfigurable processor in which the connections and settings of the circuit cells within the LSI can be reconfigured may be used as well.

Furthermore, should technology for implementing integrated circuits that can replace LSI appear due to advancements in semiconductor technology or the appearance of different technologies, it would naturally be possible to perform the integration of the above functions included in the rendering system or audio output system using such technology.

Embodiments obtained by various modifications to the aforementioned embodiments that may be conceived by those skilled in the art as well as embodiments resulting from any combinations of elements and functions from different embodiments are also included in the scope of the present disclosure.

### (Supplementary notes)

The following technologies are disclosed by the description of the above embodiments.

(Technology 1) A rendering system including: a rendering device; and a nonvolatile memory, wherein the rendering device includes: a rendering processor that performs a rendering process; a rendering process idle time detector that detects idle time that occurs during the rendering process; and a firmware update processor that performs a firmware update for controlling the rendering device. The nonvolatile memory includes a first storage area and a second storage area each of which stores firmware. The rendering processor obtains a program code from the first storage area, and performs the rendering process by executing the obtained program code. The firmware update processor performs access to the second storage area based on idle time information indicating the detected idle time, where the access is related to the firmware update.

According to this, idle time that occurs during a rendering process is detected when the rendering process is performed using the program code of firmware stored in a first storage area in a single nonvolatile memory, and access, which is related to a firmware update, to a second storage area is gradually performed in the idle time. Since the rendering process is not interrupted owing to the access to the second storage area being performed in the idle time, it is possible to prevent interruptions of the process (rendering process) in FOTA that uses a single nonvolatile memory. Since FOTA is realized without using two nonvolatile memories or a large-capacity volatile memory, cost reduction is possible.

(Technology 2) The rendering system according to Technology 1, wherein the rendering device includes a normal operation mode and an update mode. In the normal operation mode, the rendering processor performs the rendering process by executing the program code obtained from the first storage area. In the normal operation mode, the firmware update processor erases at least a part of data stored in the second storage area based on the idle time information, and in the update mode, writes firmware data for the firmware update into the second storage area.

According to this, by gradually erasing data stored in the second storage area (e.g., the old version of the firmware) in idle time in the background in the normal operation mode, it is possible to reduce the process time of a firmware update performed after the normal operation mode is switched to the update mode.

(Technology 3) The rendering system according to Technology 2, wherein after the rendering process is started by executing the program code obtained from the first storage area in the normal operation mode, the firmware update processor erases at least a part of data stored in the second storage area based on the idle time information, regardless of whether a next firmware update request is received or whether next firmware data is received.

In this way, data stored in the second storage area may be gradually erased in idle time in the background in the normal operation mode regardless of whether the next firmware update request is received or whether the next firmware data is received, and this makes it possible to reduce the rewrite time of rewriting data in the second storage area after switching to the update mode.

(Technology 4) The rendering system according to any one of Technologies 1 to 3, wherein the firmware update processor determines a method of erasing at least a part of data stored in the second storage area based on the length of the idle time indicated by the idle time information.

According to this, since the size of data erasable during one idle time varies depending on the length of the idle time, it is possible to select an erasure method, such as sector erase or block erase, according to the length of the idle time. For example, since the erasure time of the block erase per size is generally shorter than the erasure time of the sector erase per size, data can be erased more effectively using the block erase.

(Technology 5) The rendering system according to any one of Technologies 1 to 4, wherein the rendering processor calculates an amount of change in drawing content based on the most recent predetermined number of frames, and skips the rendering process for a predetermined number of subsequent frames when the amount of change is less than or equal to a predetermined amount.

According to this, when the amount of change is not observed or observed little in the drawing contents of the most recent predetermined number of frames, the rendering process can be skipped for a predetermined number of subsequent frames since the same or almost same content is displayed. Accordingly, idle time can be increased by that amount, and since the amount of access to the second storage area can be increased, a firmware update can be performed in a short time.

(Technology 6) The rendering system according to any one of Technologies 1 to 5, wherein the rendering process idle time detector calculates a rendering process time required for the rendering process of a first frame, and detects idle time associated with rendering of the first frame by calculating a difference between an available rendering time and the rendering process time, where the available rendering time is a time from the start time of the rendering process of the first frame until the start time of the rendering process of a second frame subsequent to the first frame.

After the rendering process for the first frame is completed, a time until the start time of the next second frame becomes idle time. Accordingly, the idle time can be calculated based on the difference between (i) the available rendering time between the start time of the first frame and the start time of the next second frame and (ii) the rendering process time required for the rendering process for the first frame.

(Technology 7) The rendering system according to any one of Technologies 1 to 6, wherein the rendering device further includes a rendering processing amount controller that controls the processing amount of the rendering process. The firmware update processor further notifies the rendering processing amount controller of update execution state information indicating the execution state of the firmware update. The rendering processing amount controller controls the processing amount of the rendering process based on the update execution state information.

There are cases where idle time is reduced in the operation performed at a high frame rate such as 60 fps, which makes it difficult to detect idle time. In contrast, control of the processing amount of a rendering process, such as frame rate control, is performed in accordance with the state of a firmware update. When a firmware update is about to start, for example, reducing the frame rate can increase idle time, and as a result, the firmware update process can be advanced.

(Technology 8) The rendering system according to Technology 7, wherein the rendering device stores a processing amount adjustment feasibility table in which a drawing scene is associated with whether adjustment in the processing amount is allowed. When the update execution state information is notified by the firmware update processor, the rendering processing amount controller determines whether adjustment in the processing amount of a current drawing scene is allowed, based on the processing amount adjustment feasibility table, where the update execution state information indicates the start of an execution of the access to the second storage area. When determining that adjustment in the processing amount is allowed, the rendering processing amount controller performs control to reduce a frame rate in the rendering process.

For example, there are cases where it is better not to reduce the frame rate, depending on the drawing scene. In view of this, by storing a processing amount adjustment feasibility table in advance, whether adjustment in the processing amount of the current drawing scene is allowed can be determined by referring to the processing amount adjustment feasibility table, thereby reducing the frame rate of only a drawing scene for which adjustment in the processing amount is allowed.

(Technology 9) The rendering system according to Technology 7 or 8, wherein the firmware update processor calculates a required time for the firmware update based on the size of firmware update data, and notifies the rendering processing amount controller of information indicating the required time. When the update execution state information is notified by the firmware update processor, the rendering processing amount controller controls the processing amount of the rendering process based on the required time, where the update execution state information indicates the start of an execution of the access to the second storage area.

According to this, since a time required for a firmware update (the total amount of time necessary for erasure and writing) varies depending on the size of firmware update data, the required time can be calculated based on the size. When a firmware update takes longer than a certain amount of time, for example, reducing the frame rate can allow the firmware update to be completed in as short a time as possible.

(Technology 10) The rendering system according to any one of Technologies 7 to 9, wherein the firmware update processor further notifies the rendering processing amount controller of information indicating importance of the firmware update. When the update execution state information is notified by the firmware update processor, the rendering processing amount controller controls the processing amount of the rendering process based on the importance, the update execution state information indicating the start of an execution of the access to the second storage area.

Depending on the content of the firmware update, some updates are important while others are not, and if an update is important, the update is desired to be completed in a short time in many cases. In view of this, the update of firmware whose importance is high can be performed in a short time by reducing the frame rate.

(Technology 11) The rendering system according to any one of Technologies 7 to 10, wherein the rendering device stores a rendering update feasibility table in which a drawing scene is associated with whether a rendering update is allowed. When the update execution state information is notified by the firmware update processor, the rendering processing amount controller determines whether a rendering update is necessary for a current drawing scene based on the rendering update feasibility table. When it is determined that a rendering update is unnecessary, the rendering processor stops rendering updates until the current drawing scene is a drawing scene that requires a rendering update.

There are cases where a rendering update is not necessary, depending on the drawing scene. In view of this, when the current drawing scene is a drawing scene that does not require a rendering update, idle time can be increased by stopping rendering updates until the current drawing scene is a drawing scene that requires a rendering update. As a result, it is possible to increase the amount of access to the second storage area, enabling a firmware update in a short time.

(Technology 12) A rendering method to be executed by a rendering system including a rendering device and a nonvolatile memory, the nonvolatile memory including a first storage area and a second storage area each of which stores firmware for controlling the rendering device, the rendering method including: performing a rendering process; detecting idle time that occurs during the rendering process; and performing a firmware update. In the performing of the rendering process, a program code is obtained from the first storage area and the rendering process is performed by executing the obtained program code. In the performing of the firmware update, access to the second storage area is performed based on idle time information indicating the detected idle time, where the access is related to the firmware update.

According to this, it is possible to provide a rendering method capable of preventing interruptions of the process (rendering process) in FOTA that uses a single nonvolatile memory.

(Technology 13) An audio output system including: an audio output device; and a nonvolatile memory, wherein the audio output device includes: an audio output processor that performs an audio output process; an audio output process idle time detector that detects idle time that occurs during the audio output process; and a firmware update processor that performs a firmware update for controlling the audio output device. The nonvolatile memory includes a first storage area and a second storage area each of which stores firmware. The audio output processor obtains a program code from the first storage area, and performs the audio output process by executing the obtained program code. The firmware update processor performs access to the second storage area based on idle time information indicating the detected idle time, where the access is related to the firmware update.

According to this, idle time that occurs during an audio output process is detected when the audio output process is performed using the program code of firmware stored in a first storage area in a single nonvolatile memory, and an access, which is related to a firmware update, to a second storage area is gradually performed in the idle time. Since the audio output process is not interrupted owing to the access to the second storage area being performed in the idle time, it is possible to prevent interruptions of the process (audio output process) in FOTA that uses a single nonvolatile memory.

(Technology 14) An audio output method to be executed by an audio output system including an audio output device and a nonvolatile memory, the nonvolatile memory including a first storage area and a second storage area each of which stores firmware for controlling the audio output device, the audio output method including: performing an audio output process; detecting idle time that occurs during the audio output process; and performing a firmware update. In the performing of the audio output process, a program code is obtained from the first storage area and the audio output process is performed by executing the obtained program code. In the performing of the firmware update, access to the second storage area is performed based on idle time information indicating the detected idle time, where the access is related to the firmware update.

According to this, it is possible to provide an audio output method capable of preventing interruptions of the process (audio output process) in FOTA that uses a single nonvolatile memory.

### [Industrial Applicability]

The present disclosure can be applied to, for instance, systems that update firmware using FOTA.

### [Reference Signs List]

- 1, 2: rendering system
- 3: audio output system
- 10, 10a: rendering device
- 10b: audio output device
- 11: rendering processor
- 11a: audio output processor
- 12: rendering process idle time detector
- 12a: audio output process idle time detector
- 13, 13a: firmware update processor
- 14: rendering processing amount controller
- 20: nonvolatile memory
- 21: first storage area
- 22: second storage area
- 100: TCU
- 200: display
- 300: loudspeaker

## Claims

1. A rendering system comprising:
a rendering device; and
a nonvolatile memory, wherein
the rendering device includes:
a rendering processor that performs a rendering process;
a rendering process idle time detector that detects idle time that occurs during the rendering process; and
a firmware update processor that performs a firmware update for controlling the rendering device,
the nonvolatile memory includes a first storage area and a second storage area each of which stores firmware,
the rendering processor obtains a program code from the first storage area, and performs the rendering process by executing the program code obtained, and
the firmware update processor performs access to the second storage area based on idle time information indicating the idle time detected, the access being related to the firmware update.

2. The rendering system according to claim 1, wherein
the rendering device includes a normal operation mode and an update mode,
in the normal operation mode, the rendering processor performs the rendering process by executing the program code obtained from the first storage area, and
in the normal operation mode, the firmware update processor erases at least a part of data stored in the second storage area based on the idle time information, and in the update mode, writes firmware data for the firmware update into the second storage area.

3. The rendering system according to claim 2, wherein
after the rendering process is started by executing the program code obtained from the first storage area in the normal operation mode, the firmware update processor erases at least a part of data stored in the second storage area based on the idle time information, regardless of whether a next firmware update request is received or whether next firmware data is received.

4. The rendering system according to any one of claims 1 to 3, wherein
the firmware update processor determines a method of erasing at least a part of data stored in the second storage area based on a length of the idle time indicated by the idle time information.

5. The rendering system according to any one of claims 1 to 4, wherein
the rendering processor calculates an amount of change in drawing content based on the most recent predetermined number of frames, and skips the rendering process for a predetermined number of subsequent frames when the amount of change is less than or equal to a predetermined amount.

6. The rendering system according to any one of claims 1 to 5, wherein
the rendering process idle time detector calculates a rendering process time required for the rendering process of a first frame, and detects idle time associated with rendering of the first frame by calculating a difference between an available rendering time and the rendering process time, the available rendering time being a time from a start time of the rendering process of the first frame until a start time of the rendering process of a second frame subsequent to the first frame.

7. The rendering system according to any one of claims 1 to 6, wherein
the rendering device further includes a rendering processing amount controller that controls a processing amount of the rendering process,
the firmware update processor further notifies the rendering processing amount controller of update execution state information indicating an execution state of the firmware update, and
the rendering processing amount controller controls the processing amount of the rendering process based on the update execution state information.

8. The rendering system according to claim 7, wherein
the rendering device stores a processing amount adjustment feasibility table in which a drawing scene is associated with whether adjustment in the processing amount is allowed,
when the update execution state information is notified by the firmware update processor, the rendering processing amount controller determines whether adjustment in the processing amount of a current drawing scene is allowed, based on the processing amount adjustment feasibility table, the update execution state information indicating a start of an execution of the access to the second storage area, and
when determining that adjustment in the processing amount is allowed, the rendering processing amount controller performs control to reduce a frame rate in the rendering process.

9. The rendering system according to claim 7 or 8, wherein
the firmware update processor calculates a required time for the firmware update based on a size of firmware update data, and notifies the rendering processing amount controller of information indicating the required time, and
when the update execution state information is notified by the firmware update processor, the rendering processing amount controller controls the processing amount of the rendering process based on the required time, the update execution state information indicating a start of an execution of the access to the second storage area.

10. The rendering system according to any one of claims 7 to 9, wherein
the firmware update processor further notifies the rendering processing amount controller of information indicating importance of the firmware update, and
when the update execution state information is notified by the firmware update processor, the rendering processing amount controller controls the processing amount of the rendering process based on the importance, the update execution state information indicating a start of an execution of the access to the second storage area.

11. The rendering system according to any one of claims 7 to 10, wherein
the rendering device stores a rendering update feasibility table in which a drawing scene is associated with whether a rendering update is allowed,
when the update execution state information is notified by the firmware update processor, the rendering processing amount controller determines whether a rendering update is necessary for a current drawing scene based on the rendering update feasibility table, and
when it is determined that a rendering update is unnecessary, the rendering processor stops rendering updates until the current drawing scene is a drawing scene that requires a rendering update.

12. A rendering method to be executed by a rendering system including a rendering device and a nonvolatile memory, the nonvolatile memory including a first storage area and a second storage area each of which stores firmware for controlling the rendering device, the rendering method comprising:
performing a rendering process;
detecting idle time that occurs during the rendering process; and
performing a firmware update, wherein
in the performing of the rendering process, a program code is obtained from the first storage area and the rendering process is performed by executing the program code obtained, and
in the performing of the firmware update, access to the second storage area is performed based on idle time information indicating the idle time detected, the access being related to the firmware update.

13. An audio output system comprising:
an audio output device; and
a nonvolatile memory, wherein
the audio output device includes:
an audio output processor that performs an audio output process;
an audio output process idle time detector that detects idle time that occurs during the audio output process; and
a firmware update processor that performs a firmware update for controlling the audio output device,
the nonvolatile memory includes a first storage area and a second storage area each of which stores firmware,
the audio output processor obtains a program code from the first storage area, and performs the audio output process by executing the program code obtained, and
the firmware update processor performs access to the second storage area based on idle time information indicating the idle time detected, the access being related to the firmware update.

14. An audio output method to be executed by an audio output system including an audio output device and a nonvolatile memory, the nonvolatile memory including a first storage area and a second storage area each of which stores firmware for controlling the audio output device, the audio output method comprising:
performing an audio output process;
detecting idle time that occurs during the audio output process; and
performing a firmware update, wherein
in the performing of the audio output process, a program code is obtained from the first storage area and the audio output process is performed by executing the program code obtained, and
in the performing of the firmware update, access to the second storage area is performed based on idle time information indicating the idle time detected, the access being related to the firmware update.
